# EUROPÄISCHE PATENTSCHRIFT

(11) **EP 3 084 496 B1**
(45) Veröffentlichungstag und Bekanntmachung des Hinweises auf die Patenterteilung: **31.03.2021**
(21) Anmeldenummer: 14812733.5
(22) Anmeldetag: 16.12.2014
(51) Int. Cl.: G02B 19/00, F21V 7/00, F21V 13/04, F21V 5/00, F21Y 103/10, F21Y 115/10, F21V 8/00

(54) **OPTISCHES ELEMENT, SOWIE ANORDNUNG ZUR LICHTABGABE**
OPTICAL ELEMENT, AND ASSEMBLY FOR EMITTING LIGHT
ÉLÉMENT OPTIQUE ET SYSTÈME D'ÉMISSION DE LUMIÈRE

(30) Priorität: 17.12.2013 DE 102013226181
(43) Veröffentlichungstag der Anmeldung: 26.10.2016
(60) Teilanmeldung: 21155694.9
(73) Patentinhaber: Zumtobel Lighting GmbH, 6850 Dornbirn (AT)
(72) Erfinder: EBNER, Stephan, A-6850 Dornbirn (AT)
(74) Vertreter: Thun, Clemens
(86) Internationale Anmeldenummer: PCT/EP2014/077905
(87) Internationale Veröffentlichungsnummer: WO 2015/091444

(56) Entgegenhaltungen:
- US-A1- 2004 070 855
- US-A1- 2006 291 201
- US-A1- 2010 142 200
- US-A1- 2010 259 153
- US-A1- 2012 313 534

## Beschreibung

Die Erfindung betrifft ein optisches Element zur Beeinflussung eines von einer Lichtquelle abgestrahlten Lichts, sowie eine Anordnung zur Lichtabgabe mit einem solchen optischen Element.

Aus der DE 10 2012 205 067 A1 ist eine Leuchte mit einer LED-Lichtquelle (LED: Licht emittierende Diode) und einer Linsenanordnung zur optischen Beeinflussung des von der LED-Lichtquelle abgestrahlten Lichts bekannt. Der Hauptkörper der Linsenanordnung ist etwa kegelstumpfförmig ausgebildet und weist auf seiner, der LED-Lichtquelle zugewandten Rückseite eine Vertiefung für die LED-Lichtquelle auf. Die Vertiefung besteht aus einer konvex geformten Bodenfläche und Seitenflächen. Lichtstrahlen, die über die Bodenfläche in die Linsenanordnung eintreten, werden durch Letztere gebündelt und treten dann auf der, der Vertiefung gegenüberliegenden Vorderseite wieder aus; dabei erfahren diese Lichtstrahlen keine weitere Wechselwirkung mit einer Begrenzungsfläche der Linsenanordnung. Lichtstrahlen, die über die Seitenflächen der Vertiefung in die Linsenanordnung eintreten, werden an den, durch die Kegelstumpfform gebildeten Mantelflächen der Linsenanordnung totalreflektiert und treten im Weiteren ebenfalls über die Vorderseite wieder aus.

Es hat sich gezeigt, dass bei einer solchen Linsenanordnung in einem zentralen Bereich der Lichtabgabe eine verhältnismäßig hohe Leuchtdichte auftritt. Dieser helle Bereich ist auf diejenigen Lichtstrahlen zurückzuführen, die über die Bodenfläche der Vertiefung in die Linsenanordnung eintreten und dann unmittelbar über die Vorderseite wieder austreten. Aufgrund dieser hohen Leuchtdichte wirkt die Lichtabgabe auf einen Betrachter, der auf die Vorderseite der Linsenanordnung blickt, in der Regel unangenehm.

Zur Vermeidung dieses Problems sind aus dem Stand der Technik bereits LinsenSysteme bekannt; allerdings weisen diese Systeme verspiegelte Flächen auf, die in einem zusätzlichen Bearbeitungsschritt hergestellt werden müssen.

Aus der US 2012/0313534 A1 ist ein Linsenelement bekannt, das an seiner Rückseite einen Lichteintrittsbereich und einen umlenkenden Flächenbereich aufweist. An der Vorderseite werden die Lichtstrahlen teilweise gebrochen und teilweise reflektiert.

Aus der US 2006/0291201 A1 ist ein optisches Element bekannt, mit dem das Licht einer LED in zwei Strahlenbündel aufgeteilt wird. Aus der US 2010/0259153 A1 ist eine Linse für eine LED-Lichtquelle bekannt.

Aus der US 2010/259153 A1) ist eine Lampe bekannt, im Wesentlichen bestehend aus einer LED-Lichtquelle und einem Linsenkörper. Das LED-Licht, welches über eine Lichteinfallsfläche in den Linsenkörper eintritt, durchdringt und verlässt diesen aufgrund von Totalreflektion im Wesentlichen ungeschwächt und parallel gebündelt.

Aus der US 2004/070855 A1) ist eine optische Beleuchtungslinse bekannt, mit gefaltetem Verlauf der Lichtstrahlen, die im Wesentlichen durch Totalreflektion eine erste Verteilung einer Eingangsstrahlung in eine zweite Verteilung einer Ausgangsstrahlung umwandelt.

Aus der US 2010/142200 A1 ist eine Lampe in Form eines Linsenarrays entlang einer Längsachse offenbart, wobei die einzelnen LED-Lichtquellen in den Linsenkörper jeweils in voneinander gleichmäßig beabstandeten Aufnahmeräumen eingebettet sind, wobei der Linsenkörper linsenseitig eine konvexe halbzylindrische Form aufweist.

Der Erfindung liegt die Aufgabe zugrunde, ein entsprechendes verbessertes optisches Element anzugeben. Insbesondere soll das optische Element bei einfacher Herstellungsmöglichkeit verbesserte optische Eigenschaften aufweisen. Außerdem soll eine Anordnung zur Lichtabgabe mit einem solchen optischen Element angegeben werden.

Diese Aufgabe wird gemäß der Erfindung mit den in den unabhängigen Ansprüchen genannten Gegenständen gelöst. Besondere Ausführungsarten der Erfindung sind in den abhängigen Ansprüchen angegeben.

Gemäß der Erfindung ist ein optisches Element zur Beeinflussung eines von einer Lichtquelle abgestrahlten Lichts vorgesehen, das eine, der Lichtquelle abgewandte Vorderseite aufweist sowie eine, der Lichtquelle zugewandte Rückseite. An der Rückseite ist ein Lichteintrittsbereich zum Eintritt des Lichts ausgebildet und außerdem ein umlenkender Flächenbereich und an der Vorderseite ist ein vorderseitiger Flächenbereich ausgebildet. Dabei ist die Gestaltung derart, dass erste Lichtstrahlen des Lichts, die über den Lichteintrittsbereich in das optische Element eintreten, an dem umlenkenden Flächenbereich totalreflektiert werden und im Weiteren über den vorderseitigen Flächenbereich das optische Element verlassen. Dabei ist der vorderseitige Flächenbereich derart geformt gestaltet, dass zweite Lichtstrahlen des Lichts, die über den Lichteintrittsbereich in das optische Element eintreten und anschließend unmittelbar auf den vorderseitigen Flächenbereich auftreffen, dort eine Totalreflexion erfahren.

Durch diese Gestaltung des vorderseitigen Flächenbereichs lässt sich erzielen, dass Lichtstrahlen der Lichtquelle, die eine vergleichsweise hohe Intensität aufweisen, auf einen größeren Bereich verteilt werden, so dass insgesamt die maximale Leuchtdichte des über den vorderseitigen Flächenbereich abgegebenen Lichts reduziert ist. Wenn man beispielsweise als Lichtquelle eine Reihe von LEDs betrachtet, so geben diese - ohne optisches Element - ein Licht ab, das punktuell hohe Leuchtdichten zeigt; durch Verwendung des optisches Elements lassen sich diese punktuell hohen Leuchtdichten sozusagen aufspreizen.

Vorzugsweise ist das optische Element derart gestaltet, dass die zweiten Lichtstrahlen - zumindest teilweise - nachdem sie die Totalreflexion an dem vorderseitigen Flächenbereich erfahren haben, an dem umlenkenden Flächenbereich eine weitere Totalreflexion erfahren. Hierdurch ist eine besonders effiziente Ausnutzung des Lichts ermöglicht.

Vorzugsweise ist der vorderseitige Flächenbereich durch eine, auf den Lichteintrittsbereich zu gerichtete Vertiefung gebildet oder weist eine solche Vertiefung auf. Auf diese Weise lässt sich besonders geeignet erzielen, dass die zweiten Lichtstrahlen am vorderseitigen Flächenbereich totalreflektiert werden. Insbesondere ist dabei keine verspiegelte Fläche zur Umlenkung der betreffenden Lichtstrahlen erforderlich.

Vorzugsweise ist das optische Element derart geformt, dass alle Lichtstrahlen des Lichts, die über den Lichteintrittsbereich in das optische Element eintreten und über den vorderseitigen Flächenbereich das optische Element verlassen, zumindest eine Totalreflexion an einer Grenzfläche des optischen Elements erfahren. Hierdurch lässt sich besonders effektiv eine maximale Leuchtdichte der Lichtabgabe reduzieren.

Vorzugsweise ist das optische Element mit Bezug auf eine Symmetrieachse oder eine Symmetrieebene symmetrisch geformt. Hierdurch ist eine besonders gleichmäßige Lichtabgabe über den vorderseitigen Flächenbereich erzielbar.

Vorzugsweise ist der umlenkende Flächenbereich abgestuft ausgebildet, insbesondere mehrfach abgestuft. Hierdurch lässt sich erzielen, dass die Lichtstrahlen über einen besonders großen Bereich verteilt werden, so dass hohe Leuchtdichten weiterhin reduziert sind.

Erfindungsgemäß ist der Lichteintrittsbereich durch eine Ausnehmung gebildet. Hierdurch lässt sich erzielen, dass geeignet besonders viel des von der Lichtquelle abgestrahlten Lichts in das optische Element eintritt.

Erfindungsgemäß weist die Ausnehmung eine Bodenwand und Seitenwände auf. Hierdurch ist eine besonders einfache Gestaltung der Ausnehmung bei hoher lichttechnischer Effektivität erzielbar. Dabei ist das optische Element länglich gestaltet, so dass es sich entlang einer Längsachse erstreckt, wobei mehrere Ausnehmungen in einer Reihe vorgesehen sind, die sich parallel zu der Längsachse erstreckt. Jede der Ausnehmungen weist zwei weitere Seitenwände auf, die sich mit Bezug auf die Längsachse quer erstrecken und Flächenbereiche bilden, an denen Lichtstrahlen des Lichts, die über die weiteren Seitenwände in das optische Element eintreten, totalreflektiert werden.

Vorzugsweise ist die Ausnehmung dazu ausgelegt, zwei LEDs aufzunehmen.

Vorzugsweise ist das optische Element in Form eines Profilelements gestaltet. Hierdurch ist eine besonders geeignete Herstellung des optischen Elements ermöglicht.

Gemäß einem weiteren Aspekt der Erfindung ist eine Anordnung zur Lichtabgabe vorgesehen, die eine Lichtquelle zur Abstrahlung eines Lichts aufweist und ein erfindungsgemäßes optisches Element, wobei die Anordnung derart gestaltet ist, dass das Licht zumindest teilweise über den Lichteintrittsbereich in das optische Element eintritt. Vorzugsweise umfasst die Lichtquelle zumindest eine LED, denn das optische Element ist besonders dafür geeignet, hohe punktuelle Leuchtdichten, wie sie bei LEDs auftreten, "aufzulösen".

Vorzugsweise ist das optische Element in Form eines Profilelements gestaltet, wobei die Lichtquelle mehrere LEDs umfasst, die längs einer Reihe angeordnet sind, die sich parallel zur Hauptachse des Profilelements erstreckt. Hierdurch ist bei einfacher Herstellungsmöglichkeit eine besonders effektive Reduzierung der Leuchtdichten erzielbar.

Die Erfindung wird im Folgenden anhand eines Ausführungsbeispiels und mit Bezug auf die Zeichnungen näher erläutert. Es zeigen:
- Fig. 1: eine perspektivische Skizze einer Anordnung zur Lichtabgabe mit einem erfindungsgemäßen optischen Element,
- Fig. 2: eine Querschnitt-Skizze durch das optische Element und eine Lichtquelle mit Lichtstrahlen,
- Fig. 3: eine Prinzip-Skizze zum Verlauf von ersten und zweiten Lichtstrahlen,
- Fig. 4: eine Querschnitt-Skizze zu einer Variante des in Fig. 2 gezeigten optischen Elements,
- Fig. 5: eine Skizze zu unterschiedlichen Gestaltungen der Rückseite des optischen Elements und hierdurch erzielbare unterschiedliche Lichtverteilungscharakteristika,
- Fig. 6: eine perspektivische, durchscheinende Skizze zu einer weiteren Variation des optischen Elements,
- Fig. 7: eine Querschnitt-Skizze um eine Hälfte der Ausnehmung des optischen Elements herum,
- Fig. 8: eine perspektivische Skizze eines Endbereichs eines optischen Elements mit Ausnehmungen für jeweils zwei LEDs,
- Fig. 9: eine entsprechende, etwas detailliertere Darstellung,
- Fig. 10: eine perspektivische Skizze eines Längsschnitts entlang der Symmetrieebene des optischen Elements,
- Fig. 11: eine perspektivische Skizze zu einer Ausführung mit einer profilförmigen Ausnehmung,
- Fig. 12: eine Querschnitt-Skizze zu einer Variation, bei der die Ausnehmung eine doppelt-konvex gewölbte Bodenwand und konvex gewölbte Seitenwände aufweist und
- Fig. 13: zwei perspektivische Skizzen zu einer Variation mit kreisförmig gestalteten Ausnehmungen.

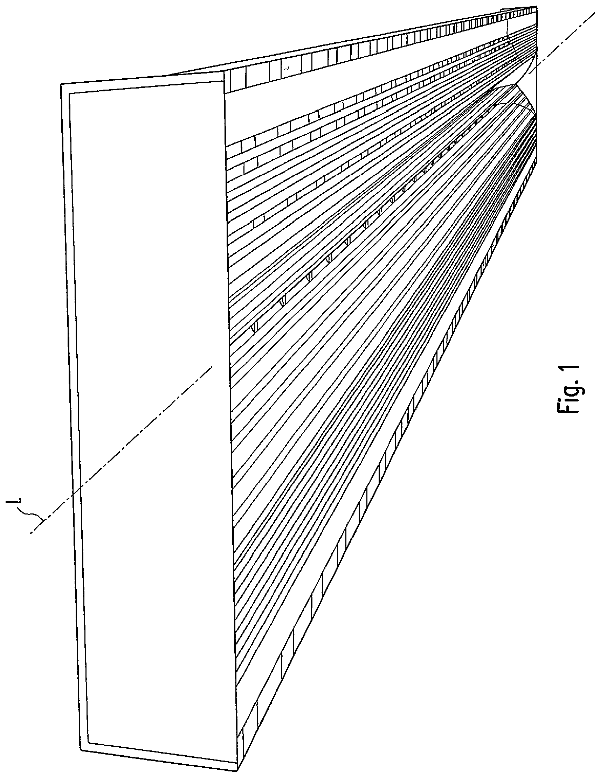

In Fig. 1 ist perspektivisch ein Beispiel einer erfindungsgemäßen Anordnung zur Lichtabgabe bei Blickrichtung von schräg unten skizziert. Die Anordnung kann - wie in Fig. 1 angedeutet - als Leuchte, beispielsweise als Deckenleuchte gestaltet sein, so dass eine Lichtabgabe nach unten vorgesehen ist. In der vorliegenden Beschreibung wird von einer solchen Orientierung der Anordnung gegenüber der Vertikalen ausgegangen. Im Allgemeinen kann jedoch auch eine anderweitige Orientierung vorgesehen sein; in diesem Fall sind die vorliegenden Richtungsangaben etc. entsprechend umzudeuten.

Bei dem in Fig. 1 gezeigten Beispiel weist die Anordnung ein quaderförmiges, nach unten offenes Gehäuse auf, in dem ein erfindungsgemäßes optisches Element zur Beeinflussung eines von einer Lichtquelle abgestrahlten Lichts angeordnet ist. Durch das Gehäuse ist eine nach unten weisende Lichtabgabeöffnung gebildet, wobei das optische Element in diese Lichtabgabeöffnung eingesetzt angeordnet ist. Auch die Lichtquelle ist innerhalb des Gehäuses angeordnet, jedoch in Fig. 1 nicht direkt erkennbar, weil sie sich hinter der Gehäusewand bzw. hinter dem optischen Element befindet.

Das optische Element ist beim hier gezeigten Beispiel länglich gestaltet, so dass es sich entlang einer Längsachse L erstreckt. Auch das Gehäuse erstreckt sich vorzugsweise entlang der Längsachse L.

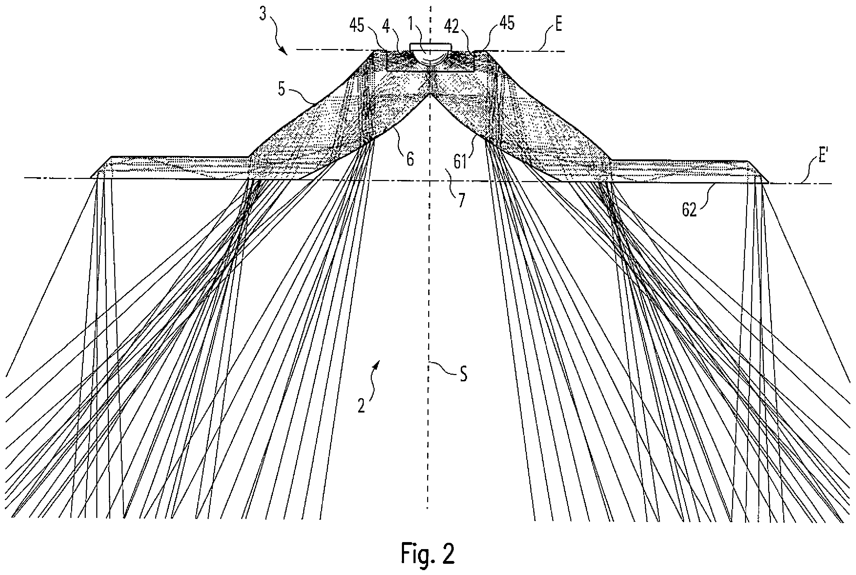

In Fig. 2 ist ein Querschnitt durch das optische Element normal zu der Längsachse L skizziert. Außerdem ist in Fig. 2 eine entsprechende Lichtquelle 1 in Form einer LED skizziert. Weiterhin sind in Fig. 2 exemplarisch Lichtstrahlen eingezeichnet, die ein von der Lichtquelle 1 abgestrahltes Licht repräsentieren und den Durchtritt des Lichts durch das optische Element illustrieren.

Das optische Element weist eine Vorderseite 2 und eine Rückseite 3 auf, wobei die Vorderseite 2 dafür vorgesehen ist, von der Lichtquelle 1 abgewandt orientiert angeordnet zu werden und die Rückseite 3 dafür, der Lichtquelle 1 zugewandt orientiert angeordnet zu werden. Bei der oben genannten, hier gezeigten exemplarischen Orientierung der Anordnung und des optischen Elements weist die Rückseite 3 des optischen Elements nach oben und die Vorderseite 2 nach unten.

An der Rückseite 3 des optischen Elements ist ein Lichteintrittsbereich, insbesondere in Form einer Ausnehmung 4 ausgebildet, der bzw. die zum Eintritt des von der Lichtquelle 1 abgestrahlten Lichts vorgesehen ist. Insbesondere kann vorgesehen sein, dass die Ausnehmung 4 einen Randbereich 45 aufweist, der in einer beispielsweise horizontalen Ebene E verläuft.

Vorzugsweise ist vorgesehen, dass die Lichtquelle 1 zumindest teilweise in der Ausnehmung 4 angeordnet wird bzw. so, dass sie zumindest teilweise unterhalb der Ebene E angeordnet ist. Hierdurch ist ein besonders unmittelbarer Eintritt des Lichts in das optische Element ermöglicht.

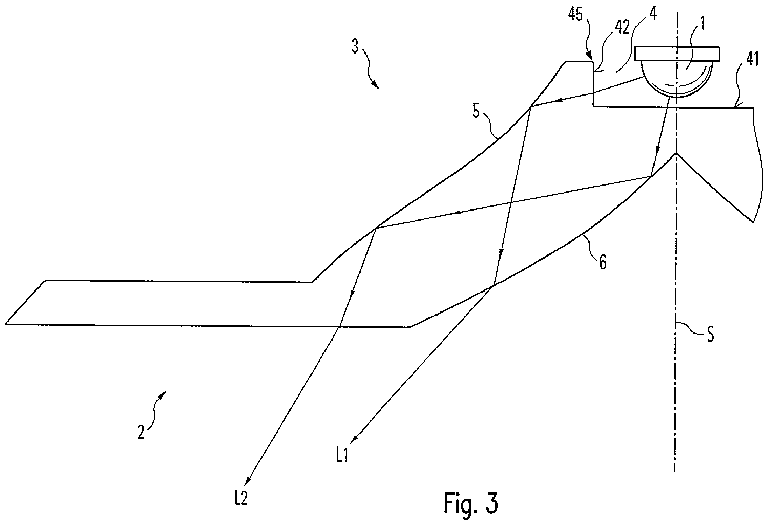

In Fig. 3 ist ein weiterer Querschnitt normal zu der Längsachse L skizziert, der einen Ausschnitt des optischen Elements sowie die Lichtquelle 1 umfasst. Die Ausnehmung 4 ist vorzugsweise derart gestaltet, dass sie eine Bodenwand 41 und Seitenwände 42 aufweist. Im hier gezeigten Beispiel sind die Bodenwand 41 und die Seitenwände 42 plan geformt. Das von der Lichtquelle 1 abgestrahlte Licht tritt dabei grundsätzlich zu einem Teil über die Bodenwand 41 und zu einem weiteren Teil über die Seitenwände 45 in das optische Element ein.

Bei dem in den Figuren 2 und 3 skizzierten Beispiel ist die Lichtquelle 1 durch wenigstens eine LED gebildet, die eine beispielsweise plane, Licht abgebende Fläche aufweist, wobei die LED hier so ausgerichtet ist, dass die Licht abgebende Fläche horizontal und nach unten weisend orientiert ist. Vorzugsweise ist die Licht abgebende Fläche dabei vollständig unterhalb der Ebene E angeordnet.

Typischerweise werden von einer LED Lichtstrahlen in alle Richtungen eines Halbraums abgegeben, wobei der Halbraum beispielsweise durch die plane Licht abgebende Fläche der LED festgelegt ist; im gezeigten Beispiel wird das Licht in den unteren Halbraum abgegeben. Dabei werden "nach vorne", hier "nach unten" - das heißt, in einen kleinen Raumwinkelbereich um die Flächennormale der planen Licht abgebenden Fläche herum bzw. um die Vertikale herum - Lichtstrahlen abgegeben, die eine höhere Intensität aufweisen als weitere Lichtstrahlen, die mehr zu den Seiten hin, also flacher abgegeben werden. Daher weisen hier Lichtstrahlen, die über die Bodenwand 41 der Ausnehmung 4 in das optische Element eintreten, eine höhere Intensität auf, als diejenigen Lichtstrahlen, die über die Seitenwände 42 der Ausnehmung 4 in das optische Element eintreten.

An der Rückseite 3 des optischen Elements ist außerdem ein umlenkender Flächenbereich 5 ausgebildet und an der Vorderseite ein vorderseitiger Flächenbereich 6, wobei die Gestaltung derart ist, dass - wie in Fig. 3 prinzipiell angedeutet - erste Lichtstrahlen L1 des Lichts, die über die Ausnehmung 4 in das optische Element eintreten, an dem umlenkenden Flächenbereich 5 totalreflektiert werden und im Weiteren über den vorderseitigen Flächenbereich 6 das optische Element verlassen. Beispielsweise ist die Gestaltung dabei derart, dass alle Lichtstrahlen, die über die Seitenwände 42 der Ausnehmung 4 in das optische Element eintreten, an dem umlenkenden Flächenbereich 5 totalreflektiert werden und im Weiteren über den vorderseitigen Flächenbereich 6 das optische Element verlassen; mit anderen Worten umfassen die ersten Lichtstrahlen L1 vorzugsweise alle Lichtstrahlen, die über die Seitenwände 42 in das optische Element eintreten.

Der vorderseitige Flächenbereich 6 ist derart geformt gestaltet, dass zweite Lichtstrahlen L2 des Lichts, die über die Ausnehmung 4 in das optische Element eintreten und anschließend unmittelbar auf den vorderseitigen Flächenbereich 6 auftreffen, dort eine Totalreflexion erfahren. Mit "unmittelbar" soll dabei zum Ausdruck gebracht werden, dass die zweiten Lichtstrahlen L2 zwischen ihrem Eintritt in das optische Element über den Lichteintrittsbereich bzw. die Ausnehmung 4 und ihrem Auftreffen auf den vorderseitigen Flächenbereich 6 keine Wechselwirkung mit einem Oberflächenbereich des optischen Elements erfahren.

Wie in Fig. 3 exemplarisch skizziert, ist dabei die Gestaltung weiterhin vorzugsweise derart, dass die zweiten Lichtstrahlen L2 nach ihrer Totalreflexion an dem vorderseitigen Flächenbereich 6 an dem umlenkenden Flächenbereich 5 eine weitere Totalreflexion erfahren, bevor sie über den vorderseitigen Flächenbereich 6 das optische Element verlassen. Dabei kann vorgesehen sein, dass zumindest ein überwiegender Teil der zweiten Lichtstrahlen L2, besonders bevorzugt alle zweiten Lichtstrahlen L2 beim Durchtritt durch das optische Element lediglich die zwei bzw. genau die zwei genannten Totalreflexionen erfahren.

Vorzugsweise ist die Gestaltung dabei derart, dass alle Lichtstrahlen, die über die Bodenwand 41 der Ausnehmung 4 in das optische Element eintreten, unmittelbar an dem vorderseitigen Flächenbereich 6 totalreflektiert werden; mit anderen Worten umfassen die zweiten Lichtstrahlen L2 vorzugsweise alle Lichtstrahlen, die über die Bodenwand 41 in das optische Element eintreten.

Auf diese Weise lässt sich insbesondere erzielen, dass Lichtstrahlen der Lichtquelle, die eine vergleichsweise hohe Intensität aufweisen, zu den Seiten hin gelenkt werden und somit auf einen größeren bzw. horizontal breiteren Bereich verteilt werden. Hierdurch lässt sich erzielen, dass die maximale Leuchtdichte der Lichtabgabe über den vorderseitigen Flächenbereich 6 reduziert ist. Dies ist für einen Betrachter, der auf die Vorderseite 2 des optischen Elements blickt, in der Regel angenehmer.

Vorzugsweise ist dabei das optische Element derart geformt ist, dass alle Lichtstrahlen des Lichts der Lichtquelle 1, die über die Ausnehmung 4 in das optische Element eintreten und über den vorderseitigen Flächenbereich 6 das optische Element verlassen, zumindest eine Totalreflexion an einer Grenzfläche des optischen Elements erfahren. Hierzu kann insbesondere vorgesehen sein, dass alle Lichtstrahlen des Lichts entweder über die Bodenwand 41 der Ausnehmung 4 oder über die Seitenwände 45 der Ausnehmung 4 in das optische Element eintreten, wobei vorzugsweise alle diejenigen Lichtstrahlen, die über die Bodenwand 41 eintreten, die zweiten Lichtstrahlen L2 bilden und alle diejenigen Lichtstrahlen, die über die Seitenwände 42 eintreten, die ersten Lichtstrahlen L1 bilden.

Um die Umlenkung der ersten Lichtstrahlen L1 besonders geeignet zu bewirken, weist der vorderseitige Flächenbereich 6 vorzugsweise eine, auf den Lichteintrittsbereich bzw. die Ausnehmung 4 zu gerichtete Vertiefung 7 auf. Bei der hier gezeigten Orientierung ist also die Vertiefung "nach oben" ausgebildet. Insbesondere kann der vorderseitige Flächenbereich 6 durch eine derartige Vertiefung 7 gebildet sein. Die Vertiefung 7 kann dabei herstellungstechnisch vorteilhaft als Einkerbung gestaltet sein.

Bei dem in Fig. 2 gezeigten Beispiel weist der vorderseitige Flächenbereich 6 einen ersten Anteil 61 und einen zweiten Anteil 62 auf, wobei die Vertiefung 7 durch den ersten Anteil 61 gebildet ist; der zweite Anteil 62 kann dabei in einer weiteren Ebene E' plan verlaufend gestaltet sein, wobei die weitere Ebene E' vorzugsweise parallel zu der zuerst genannten Ebene E, also ebenfalls horizontal orientiert ist.

Vorzugsweise ist das optische Element mit Bezug auf eine Symmetrieachse oder Symmetrieebene symmetrisch geformt. Beispielsweise kann das optische Element um eine vertikale Achse rotationssymmetrisch geformt gestaltet sein.

Im gezeigten Beispiel ist das optische Element symmetrisch mit Bezug auf eine vertikale Symmetrieebene S ausgebildet. Die Ausnehmung 4 ist dabei um die Symmetrieebene S herum ausgebildet, so dass sich das optische Element für eine "zentrale" Lichtquelle eignet. Der umlenkende Flächenbereich 5 weist hierbei zwei Anteile auf, jeweils einen auf jeder Seite der Ausnehmung 4 bzw. der Symmetrieebene S.

Vorzugsweise ist dementsprechend insbesondere auch die Vertiefung 7 symmetrisch mit Bezug auf die Symmetrieebene S gestaltet. Durch die beschriebene Formgebung weist das optische Element sozusagen zwei "Linsenflügel" auf, die symmetrisch mit Bezug auf die Symmetrieebene S gebildet sind.

Wie aus Fig. 1 andeutungsweise hervorgeht, kann das optische Element herstellungstechnisch vorteilhaft insgesamt in Form eines Profilelements gestaltet sein; auf diese Weise kann durch das optische Element sozusagen eine "Translationslinse" gebildet sein. Das optische Element lässt sich in diesem Fall vorteilhaft beispielsweise im Extrusions- oder Spritzgussverfahren herstellen.

Durch die Vertiefung 7 ist im gezeigten Beispiel ein Strahlteiler für die nach vorne gerichteten Lichtstrahlen gebildet; durch diesen werden diejenigen Lichtstrahlen, die eine besonders hohe Intensität aufweisen, zu den Seiten hin umgelenkt. Hierdurch lässt sich eine maximale Leuchtdichte besonders effektiv reduzieren. Wie aus Fig. 2 hervorgeht, lässt sich also durch das optische Element erzielen, dass das Licht der Lichtquelle 1 innerhalb der Linsenflügel aufgespreizt wird und sich die hohen Leuchtdichten der relativ kleinen Lichtquelle 1 auf einen vergleichsweise großen Bereich verteilen. Die Lichtabgabe aus dem optischen Element wirkt auf diese Weise für einen Betrachter wesentlich angenehmer.

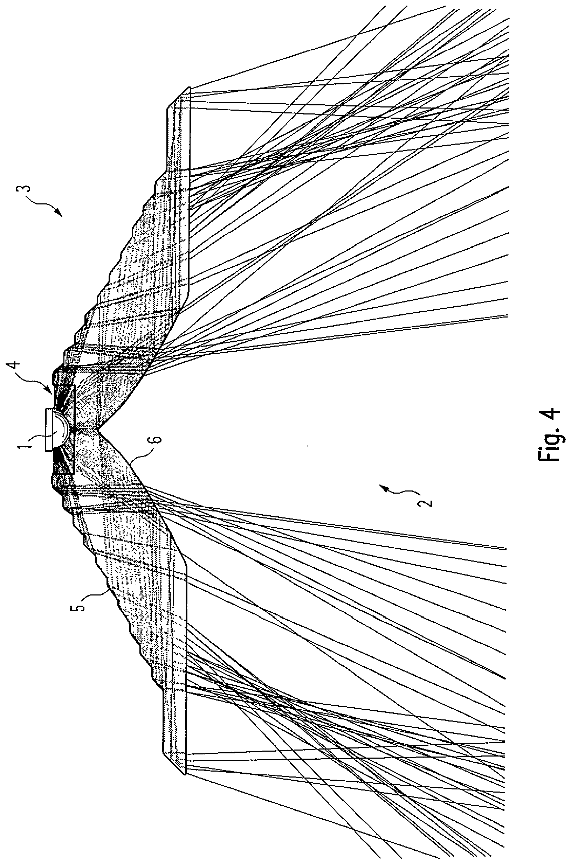

In Fig. 4 ist eine Variante skizziert, wobei die Bezugszeichen analog gebraucht sind. Im Unterschied zu dem in Fig. 2 gezeigten Beispiel ist hier der umlenkende Flächenbereich 5 mehrfach abgestuft ausgebildet. Durch diese Gestaltung lässt sich das Licht besonders geeignet und gleichmäßig zu den Seiten hin bzw. in die Linsenflügel verteilen. Die so gebildeten Stufen des umlenkenden Flächenbereichs 5 können dabei mit einer Struktur, beispielsweise einer Prismen- oder Pyramidenstruktur versehen sein oder geriffelt sein oder gemäß einer speziellen, zum Beispiel gekrümmten Geometrie gestaltet sein, also beispielsweise linsenförmig gestaltet sein; hierdurch lässt sich das Licht besonders gezielt lenken, um Leuchtdichten der reflektierenden Flächen weiter zu reduzieren. Insbesondere lassen sich die Neigungen von Flächen bzw. Flankenbereichen der Stufen hierzu entsprechend wählen.

Der umlenkende Flächenbereich 5 kann insbesondere so sein, dass er sowohl Strukturelemente aufweist, die sich parallel zu der Längsachse L erstreckend ausgebildet sind, als auch weitere Strukturelemente, die sich quer dazu, insbesondere rechtwinklig zur Längsrichtung L erstreckend ausgebildet sind. Hierdurch lässt sich besonders geeignet eine Beeinflussung der Richtungsverteilung der Lichtabgabe des optischen Elements bzw. der Anordnung in unterschiedlichen Vertikalebenen realisieren.

Auch der zweite Anteil 62 des vorderseitigen Flächenbereichs 6 kann eine Strukturierung aufweisen; hierdurch lässt sich besonders geeignet eine weitere Lichtlenkung erzielen. Auch diese Strukturierung des vorderseitigen Flächenbereichs 6 kann sowohl Strukturelemente umfassen, die sich parallel zu der Längsachse L erstrecken, als auch weitere Strukturelemente, die sich quer dazu, insbesondere rechtwinklig zur Längsrichtung L erstrecken.

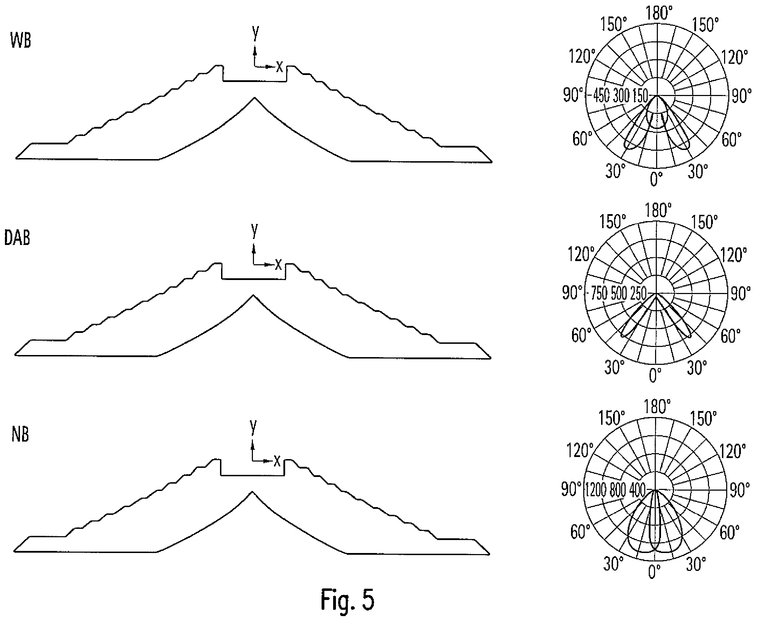

Durch Wahl einer Gestaltung des umlenkenden Flächenbereichs 5 kann die Abstrahlcharakteristik der Anordnung in erheblichem Umfang variiert werden. Dies ist in Fig. 5 angedeutet, in der in drei Reihen untereinander jeweils ein entsprechendes optisches Element im Querschnitt gezeigt ist und rechts daneben jeweils eine dazugehörige Lichtverteilungskurve. Bei dem in der oberen Reihe gezeigten Beispiel wird eine breite Lichtabstrahlung erzeugt, die zwei seitliche Flügel im Sinn einer sogenannten Batwing-Verteilung zeigt. Bei dem in der mittleren Reihe gezeigten Beispiel wird ebenfalls eine Batwing-Verteilung erzeugt, allerdings sind hier die beiden Flügel der Verteilung schmäler. Bei dem in der unteren Reihe gezeigten Beispiel ist eine Lichtverteilung erzeugt, bei der die beiden Flügel insgesamt mehr nach vorne gerichtet sind, so dass sie sich gegenseitig deutlich überlappen.

Die unterschiedlichen Lichtverteilungen lassen sich dabei erzielen, ohne dass hierfür die Vorderseite 2 des optischen Elements verändert werden müsste. Daher können entsprechende unterschiedlich wirkende optische Elemente vorteilhaft unter Verwendung eines Spritzgusswerkzeugs hergestellt werden, bei dem lediglich der, die Rückseite formende Einsatz ausgetauscht wird; dies ist vorteilhaft mit Bezug auf die Herstellung. Die so erzeugten optischen Elemente weisen dementsprechend jeweils gleichartige Vorderseiten auf, so dass sie, wenn sie wie in Fig. 1 skizziert, in einem Gehäuse eingesetzt sind, praktisch alle dasselbe Erscheinungsbild zeigen.

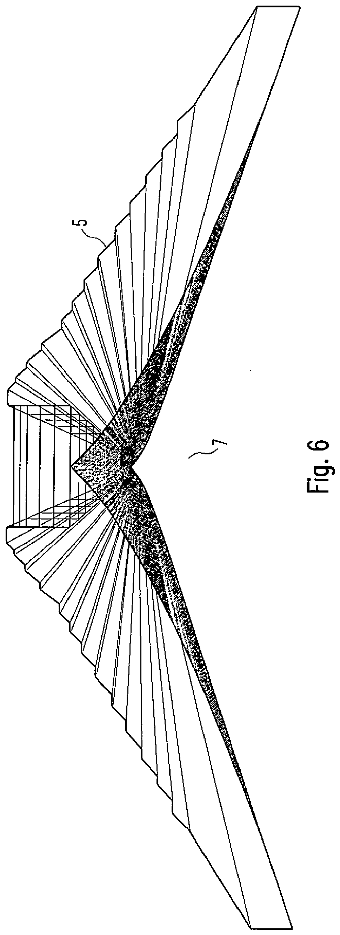

In Fig. 6 ist eine weitere Variation des optischen Elements perspektivisch skizziert, bei der der vorderseitige Flächenbereich 6 durch eine entsprechende Vertiefung 7 gebildet ist, also keine horizontalen planen Bereiche aufweist. Auf diese Weise sind sozusagen zwei "schräge" Linsenflügel gebildet. Durch eine derartige Variation des vorderseitigen Flächenbereichs 6 lässt sich die Abstrahlcharakteristik des optischen Elements weiterhin vorteilhaft verändern.

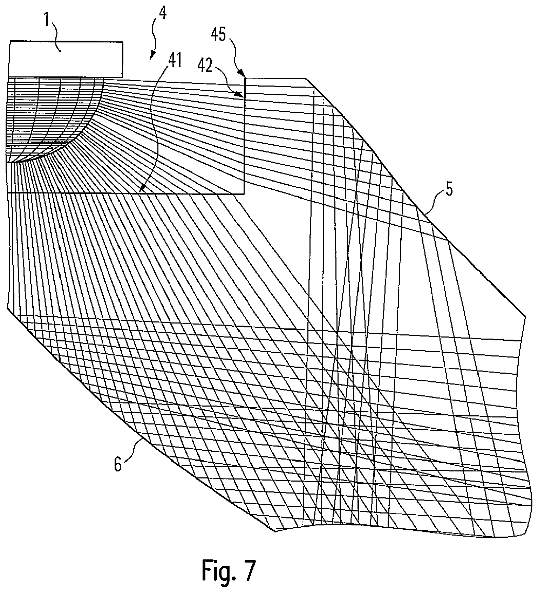

Fig. 7 zeigt eine Querschnitt-Skizze um eine Hälfte der Ausnehmung 4 des optischen Elements herum. Hier ist nur die rechte Hälfte der Ausnehmung 4 skizziert, denn die Ausnehmung 4 ist wie oben erwähnt bei diesem Beispiel symmetrisch um die Symmetrieebene S gestaltet. Die Bodenwand 41 der Ausnehmung 4 ist plan gestaltet und die Seitenwände 42 der Ausnehmung 4 sind ebenfalls plan gestaltet. Die ersten Lichtstrahlen L1 treten über die Bodenwand 41 der Ausnehmung in das optische Element ein und die zweiten Lichtstrahlen L2 über die Seitenwände 42. Eine solche "schlichte" Gestaltung, die das Licht in zwei "Hauptstrahlengänge" bzw. "Lichtpfade" aufteilt, hat sich als besonders geeignet erwiesen. Der "Lichtpfad" mit der einfachen Totalreflexion tritt dementsprechend über die Seitenwände 42 in das optische Element ein und der "Lichtpfad" mit der doppelten Totalreflexion über die Bodenwand 41. Allerdings können hiervon abweichende geometrische Gestaltungen zur Erzielung spezieller Abstrahlcharakteristika vorteilhaft sein.

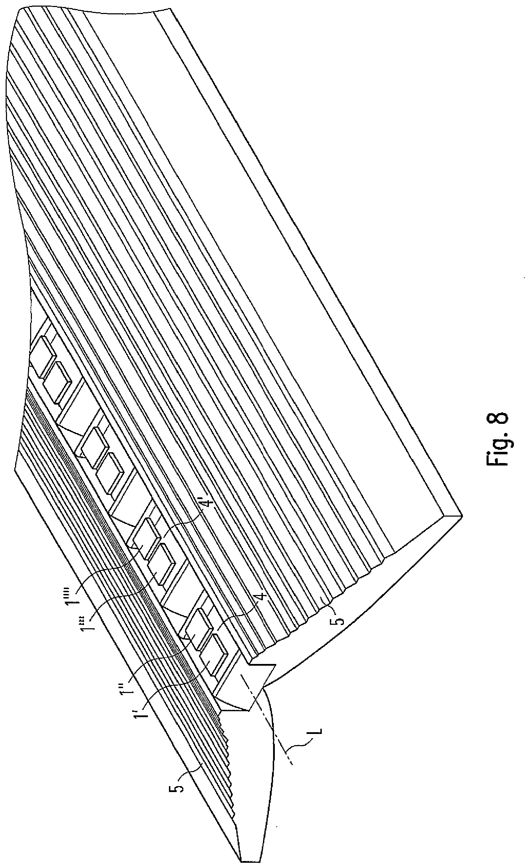

Die Ausnehmung 4 kann dazu ausgelegt sein, eine Lichtquelle 1 in Form von mehreren LEDs aufzunehmen. Beispielhaft ist in Fig. 8 eine Ausführung skizziert, bei der die Ausnehmung 4 zur Aufnahme von wenigstens, insbesondere genau zwei LEDs 1', 1"' ausgelegt ist. Dabei können, wie skizziert, mehrere Ausnehmungen 4, 4' in einer Reihe vorgesehen sein, die sich parallel zu der Längsachse L erstreckt, wobei jede der Ausnehmungen 4, 4' zur Aufnahme von wenigstens zwei LEDs 1', 1 " bzw. 1" 1 " " ausgelegt ist.

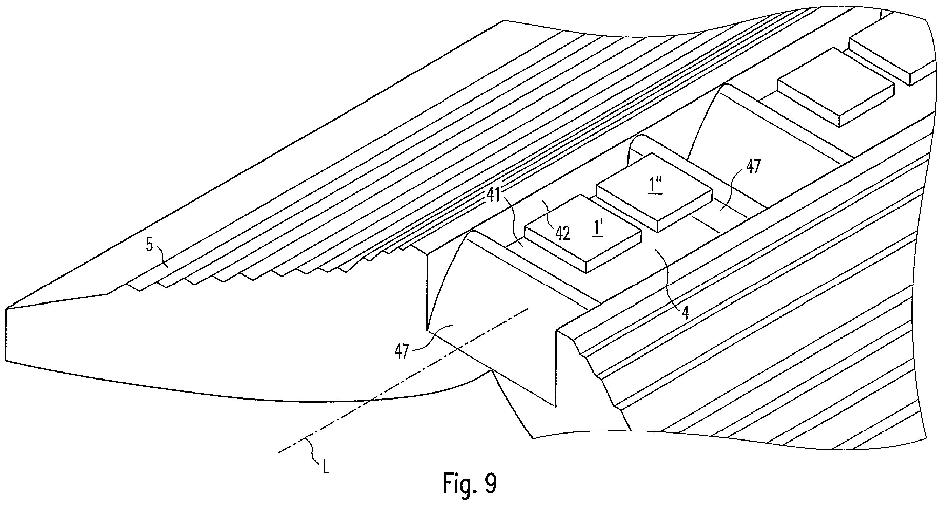

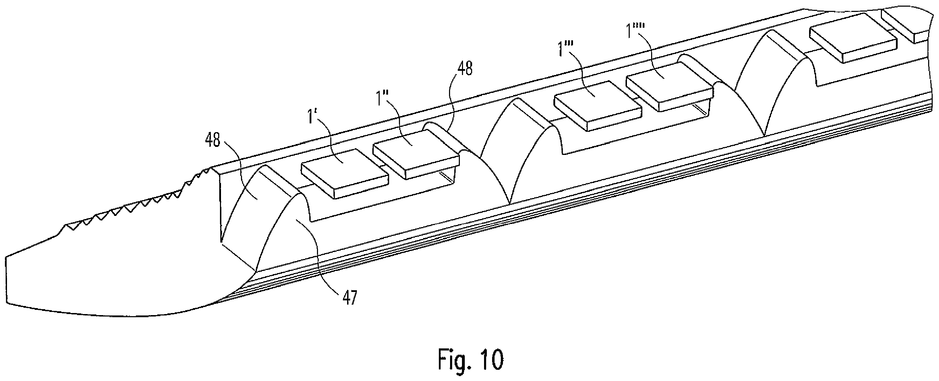

In Fig. 9 ist eine etwas detaillierte Skizze gezeigt. Bei dieser Ausführung weist die Ausnehmung 4 bzw. jede der Ausnehmungen 4, 4' zwei weitere Seitenwände 47 auf, die sich mit Bezug auf die Längsachse L quer erstrecken. Durch diese weiteren Seitenwände 47 lässt sich besonders geeignet eine Entblendung in Längsrichtung, also in einer Richtung parallel zur Längsachse L erzielen. Wie in Fig. 10 skizziert, die eine entsprechende Schnittdarstellung längs der Symmetrieebene S zeigt, sind hierzu durch die weiteren Seitenwände 47 vorzugsweise weitere Flächenbereiche 48 gebildet, an denen Lichtstrahlen des Lichts, die über die weiteren Seitenwände 47 in das optische Element eintreten, totalreflektiert werden.

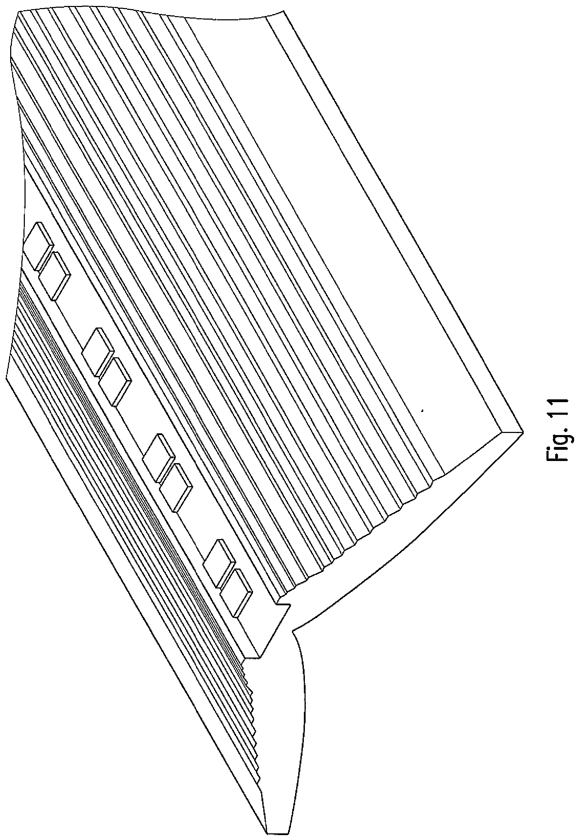

Wenn eine entsprechende Längsentblendung nicht erforderlich ist bzw. anderweitig erzeugt wird, also nur die "Querverteilung" der Abstrahlcharakteristik wichtig ist, kann auf die Ausbildung der weiteren Seitenwände 47 verzichtet werden und die Ausnehmung 4 herstellungstechnisch vorteilhaft profilförmig gestaltet werden, wie in Fig. 11 skizziert. Dies ist vorteilhaft, weil das optische Element in diesem Fall besonders geeignet als Extrusions- oder Spritzgussteil hergestellt werden kann.

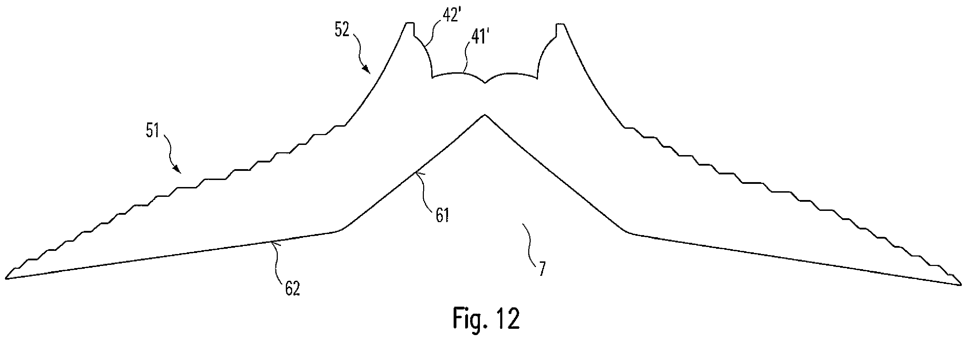

In Fig. 12 ist eine Querschnitt-Skizze zu einer Variation des optischen Elements gezeigt, bei der die Ausnehmung 4 eine konvex geformte bzw. mehrfach-konvex geformte, beispielsweise doppelt-konvex geformte Bodenwand 41' und konvex gewölbte Seitenwände 42' aufweist. Hierdurch lassen sich die Lichtstrahlen besonders geeignet vorkollimieren bzw. beim Eintritt besonders geeignet bündeln. Auf diese Weise lässt sich das Licht noch effizienter für die Lichtabgabe nutzen und das optische Element mit einer geringeren Materialstärke gestalten.

Außerdem kann hierbei ein äußerer Teil 51 des umlenkenden Flächenbereichs 5 strukturiert gestaltet werden und - hiervon separiert - ein innerer Teil 52 des umlenkenden Flächenbereichs 5 für die Erzielung der Totalreflexion "steil" gestaltet werden. Hierdurch lässt sich geeignet eine Entblendungswirkung erzielen.

Der vorderseitige Flächenbereich 6 weist hier einen ersten, inneren Anteil 61 und einen zweiten, äußeren Anteil 62 auf, wobei die Vertiefung 7 durch den ersten Anteil 61 gebildet ist; der zweite Anteil 62 ist hier jedoch nicht, wie bei dem in Fig. 2 gezeigten Beispiel, horizontal verlaufend, sonder leicht nach vorne geneigt gestaltet. Der zweite Anteil 62 kann hierbei mit einer Strukturierung versehen sein, um eine bestimmte Lichtabstrahlcharakteristik zu erzielen.

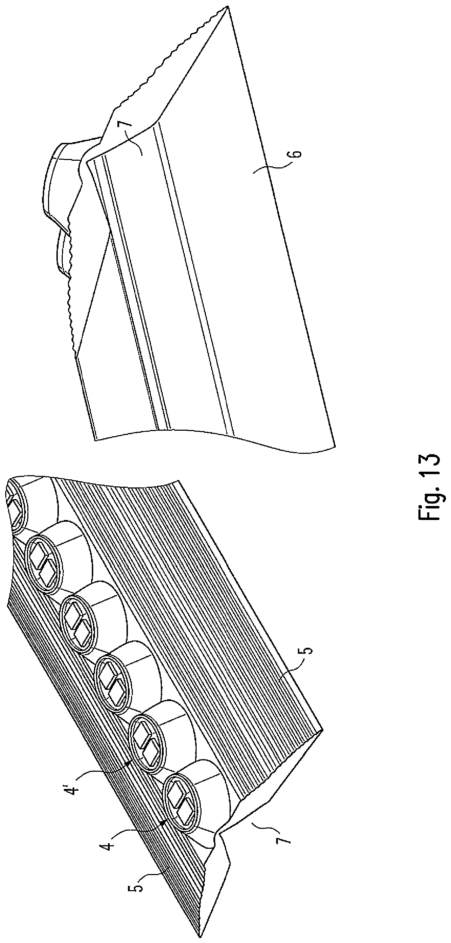

In Fig. 13 sind zwei perspektivische Ansichten einer Variation skizziert, gemäß der die Ausnehmungen 4, 4' mit Begrenzungswänden gestaltet sind, durch deren Außenflächen jeweils Kegelabschnittformen festgelegt sind. Dies ist mit Bezug auf die Erzielung einer Entblendung in allen vertikalen Ebenen besonders vorteilhaft.

Mit einer erfindungsgemäßen Anordnung bzw. einem erfindungsgemäßen optischen Element lassen sich punktuell hohe Leuchtdichten, wie sie beispielsweise durch LEDs in der Vorwärtsstrahlung typischerweise erzeugt werden, auf die "Linsenflügel" des optischen Elements verteilen und somit signifikant reduzieren. Das Licht lässt sich durch mehrere Flächenbereiche (Ausnehmung 4, umlenkender Flächenbereich 5, vorderseitiger Flächenbereich 6) gezielt lenken und somit eine gewünschte Abstrahlcharakteristik bewirken. Dabei werden keine verspiegelten Flächen benötigt. Das optische Element eignet sich auch für mehrere LEDs pro Ausnehmung. Durch ausschließliche Variation der Rückseite des optischen Elements lassen sich die Abstrahleigenschaften einer entsprechenden Anordnung zur Lichtabgabe verändern.

Die erfindungsgemäße Anordnung eignet sich besonders für Lichtband-Leuchten, Langfeldleuchten und Retrofitanwendungen, bei denen Leuchtstoffröhren durch LED-Linien ersetzt werden.

## Patentansprüche

1. Optisches Element zur Beeinflussung eines von einer Lichtquelle (1) abgestrahlten Lichts, aufweisend
- eine, der Lichtquelle (1) abgewandte Vorderseite (2) und
- eine, der Lichtquelle (1) zugewandte Rückseite (3),
wobei an der Rückseite (3) ein Lichteintrittsbereich (4) zum Eintritt des Lichts ausgebildet ist und außerdem ein umlenkender Flächenbereich (5) ausgebildet ist und an der Vorderseite (2) ein vorderseitiger Flächenbereich (6) ausgebildet ist, wobei die Gestaltung derart ist, dass erste Lichtstrahlen (L1) des Lichts, die über den Lichteintrittsbereich (4) in das optische Element eintreten, an dem umlenkenden Flächenbereich (5) totalreflektiert werden und im Weiteren über den vorderseitigen Flächenbereich (6) das optische Element verlassen, wobei der vorderseitige Flächenbereich (6) derart geformt gestaltet ist, dass zweite Lichtstrahlen (L2) des Lichts, die über den Lichteintrittsbereich (4) in das optische Element eintreten und anschließend unmittelbar auf den vorderseitigen Flächenbereich (6) auftreffen, dort eine Totalreflexion erfahren, wobei der Lichteintrittsbereich durch eine Ausnehmung (4) gebildet ist,
**dadurch gekennzeichnet,**
**dass** die Ausnehmung (4) eine Bodenwand (41) und Seitenwände (42) aufweist, wobei das optische Element länglich gestaltet ist, so dass es sich entlang einer Längsachse (L) erstreckt, wobei mehrere Ausnehmungen (4, 4') in einer Reihe vorgesehen sind, die sich parallel zu der Längsachse (L) erstreckt, wobei jede der Ausnehmungen (4, 4') zwei weitere Seitenwände (47) aufweist, die sich mit Bezug auf die Längsachse (L) quer erstrecken und Flächenbereiche (48) bilden, an denen Lichtstrahlen des Lichts, die über die weiteren Seitenwände (47) in das optische Element eintreten, totalreflektiert werden.

2. Optisches Element nach Anspruch 1,
das derart gestaltet ist, dass die zweiten Lichtstrahlen (L2) - zumindest teilweise
- nachdem sie die Totalreflexion an dem vorderseitigen Flächenbereich (6) erfahren haben, an dem umlenkenden Flächenbereich (5) eine weitere Totalreflexion erfahren.

3. Optisches Element nach Anspruch 1 oder 2,
bei dem der vorderseitige Flächenbereich (6) durch eine, auf den Lichteintrittsbereich (4) zu gerichtete Vertiefung (7) gebildet ist oder eine solche Vertiefung (7) aufweist.

4. Optisches Element nach einem der vorhergehenden Ansprüche,
das derart geformt ist, dass alle Lichtstrahlen des Lichts, die über den Lichteintrittsbereich (4) in das optische Element eintreten und über den vorderseitigen Flächenbereich (6) das optische Element verlassen, zumindest eine Totalreflexion an einer Grenzfläche des optischen Elements erfahren.

5. Optisches Element nach einem der vorhergehenden Ansprüche,
das mit Bezug auf eine Symmetrieachse oder Symmetrieebene (S) symmetrisch geformt ist.

6. Optisches Element nach einem der vorhergehenden Ansprüche,
bei dem der umlenkende Flächenbereich (5) abgestuft ausgebildet ist, vorzugsweise mehrfach abgestuft.

7. Optisches Element nach einem der vorhergehenden Ansprüche,
bei dem die Bodenwand (41) plan oder konvex geformt ist und/oder die Seitenwände (42) plan oder konvex geformt sind.

8. Optisches Element nach einem der vorhergehenden Ansprüche,
das in Form eines Profilelements gestaltet ist.

9. Anordnung zur Lichtabgabe, aufweisend
- eine Lichtquelle (1) zur Abstrahlung eines Lichts und
- ein optisches Element nach einem der vorhergehenden Ansprüche, wobei die Anordnung derart gestaltet ist, dass das Licht zumindest teilweise über den Lichteintrittsbereich (4) in das optische Element eintritt.

10. Anordnung nach Anspruch 9,
bei der die Lichtquelle (1) zumindest eine LED (1', 1 ", 1 1" ") umfasst.

11. Anordnung nach Anspruch 10,
bei der das optische Element die im Anspruch 8 angegebenen Merkmale aufweist und die Lichtquelle (1) mehrere LEDs (1', 1") umfasst, die längs einer Reihe angeordnet sind, die sich parallel zur Hauptachse des Profilelements erstreckt.

## Claims

1. Optical element for influencing a light emitted by a light source (1), comprising
- a front side (2) facing away from the light source (1), and
- a rear side (3) facing the light source (1),
wherein a light entry area (4) for the entry of light is formed on the rear side (3), and in addition a deflecting surface area (5) is formed, and a front surface area (6) is formed on the front side (2), wherein the design is such that first light rays (L1) of the light which enter the optical element via the light entry area (4) are totally reflected at the deflecting surface area (5) and then leave the optical element via the front surface area (6); wherein the front surface area (6) is shaped in terms of its design such that second light rays (L2) of the light which enter the optical element via the light entry area (4) and then directly impinge on the front surface area (6) undergo a total reflection there, wherein the light entry area is formed by a recess (4),
**characterized in that**
the recess (4) has a bottom wall (41) and side walls (42), wherein the optical element is elongate so as to extend along a longitudinal axis (L); wherein a plurality of recesses (4, 4') are provided in a row that extends parallel to the longitudinal axis (L); wherein each of the recesses (4, 4') has two further side walls (47) which extend transversely with respect to the longitudinal axis (L) and form surface areas (48) at which light rays of the light that enter the optical element via the further side walls (47) are totally reflected.

2. Optical element according to Claim 1,
which is designed in such a way that the second light rays (L2) - at least partially - undergo a further total reflection at the deflecting surface area (5) after having undergone total reflection at the front surface area (6).

3. Optical element according to Claims 1 or 2,
in which the front surface area (6) is formed by a depression (7) directed towards the light entry area (4), or has such a depression (7).

4. Optical element according to any one of the preceding claims,
which is shaped in such a way that all light rays of the light which enter the optical element via the light entry area (4) and leave the optical element via the front surface area (6) undergo at least one total reflection at an interface of the optical element.

5. Optical element according to any one of the preceding claims,
which is symmetrically shaped with respect to an axis of symmetry or plane of symmetry (S).

6. Optical element according to any one of the preceding claims,
wherein the deflecting surface area (5) has a stepped design, preferably several times stepped.

7. Optical element according to any one of the preceding claims,
wherein the bottom wall (41) is planar or convex in shape, and/or the side walls (42) are planar or convex in shape.

8. Optical element according to any one of the preceding claims,
which is designed in the form of a profile element.

9. Arrangement for light emission, comprising
- a light source (1) for emitting a light, and
- an optical element according to any one of the preceding claims, wherein the arrangement is designed such that the light enters the optical element at least partially via the light entry area (4).

10. Arrangement according to Claim 9,
the light source (1) comprising at least one LED (1', 1", 1'", 1"").

11. Arrangement according to Claim 10,
in which the optical element has the features specified in Claim 8, and the light source (1) comprises a plurality of LEDs (1', 1") arranged along a row extending parallel to the main axis of the profile element.

## Revendications

1. Élément optique destiné à influencer la lumière émise par une source de lumière (1), présentant
- une face avant (2) tournée à l'opposé de la source de lumière (1) et
- une face arrière (3) tournée vers la source de lumière (1),
une zone d'entrée de la lumière (4) destinée à l'entrée de la lumière étant réalisée sur la face arrière (3) et en outre une zone de surface de déviation (5) étant réalisée et une zone de surface avant (6) étant réalisée sur la face avant (2), la conception étant telle que les premiers rayons lumineux (L1) de la lumière pénétrant dans l'élément optique par la zone d'entrée de la lumière (4) sont totalement réfléchis sur la zone de surface de déviation (5) et quittent ensuite l'élément optique par la zone de surface avant (6),
la zone de surface avant (6) étant conçue avec une forme telle que des seconds rayons lumineux (L2) de la lumière qui pénètrent dans l'élément optique par la zone d'entrée de la lumière (4) et atteignent ensuite directement la zone de surface avant (6), y subissent une réflexion totale, la zone d'entrée de la lumière étant constituée par un évidement (4),
**caractérisé en ce**
**que** l'évidement (4) présente une paroi de fond (41) et des parois latérales (42), l'élément optique étant conçu avec une forme oblongue, de manière à ce qu'il s'étende le long d'un axe longitudinal (L), plusieurs évidements (4, 4') étant prévus dans une rangée, qui s'étend parallèlement à l'axe longitudinal (L), chacun des évidements (4, 4') présentant deux autres parois latérales (47), qui s'étendent transversalement par rapport à l'axe longitudinal (L) et constituent des zones de surface (48), sur lesquelles les rayons lumineux de la lumière qui pénètrent dans l'élément optique par les autres parois latérales (47) sont totalement réfléchis.

2. Élément optique selon la revendication 1,
qui est conçu de manière à ce que les seconds rayons lumineux (L2), après avoir subi la réflexion totale sur la zone de surface avant (6), subissent - au moins en partie - une autre réflexion totale sur la zone de surface de déviation (5).

3. Élément optique selon la revendication 1 ou 2,
sur lequel la zone de surface avant (6) est constituée par un renfoncement (7) dirigé vers la zone d'entrée de la lumière (4) ou présente un tel renfoncement (7).

4. Élément optique selon l'une quelconque des revendications précédentes,
qui est formé de manière à ce que tous les rayons lumineux de la lumière qui pénètrent dans l'élément optique par la zone d'entrée de la lumière (4) et quittent l'élément optique par la zone de surface avant (6) subissent au moins une réflexion totale au niveau d'une interface de l'élément optique.

5. Élément optique selon l'une quelconque des revendications précédentes,
qui est formé symétriquement par référence à un axe de symétrie ou à un plan de symétrie (S).

6. Élément optique selon l'une quelconque des revendications précédentes,
sur lequel la zone de surface de déviation (5) est réalisée en étages, de préférence en plusieurs étages.

7. Élément optique selon l'une quelconque des revendications précédentes,
sur lequel la paroi de fond (41) a une forme plane ou convexe et/ou les parois latérales (42) ont une forme plane ou convexe.

8. Élément optique selon l'une quelconque des revendications précédentes, qui est conçu sous la forme d'un élément profilé.

9. Dispositif d'émission de lumière, présentant
- une source de lumière (1) servant à diffuser une lumière et
- un élément optique selon l'une quelconque des revendications précédentes, le dispositif étant conçu de manière à ce que la lumière pénètre au moins en partie dans l'élément optique par la zone d'entrée de la lumière (4).

10. Dispositif selon la revendication 9,
sur lequel la source de lumière (1) comprend au moins une diode électroluminescente (1', 1", 1'", 1"").

11. Dispositif selon la revendication 10,
sur lequel l'élément optique présente les caractéristiques mentionnées dans la revendication 8 et la source de lumière (1) comprend plusieurs diodes électroluminescentes (1', 1"), qui sont disposées le long d'une rangée, qui s'étend parallèlement à l'axe principal de l'élément profilé.
